# EUROPEAN PATENT SPECIFICATION

(11) **EP 0 956 634 B1**
(45) Date of publication and mention of the grant of the patent: **19.10.2005**
(21) Application number: 98900827.1
(22) Date of filing: 28.01.1998
(51) Int. Cl.: H02K 1/27, H02K 15/03

(54) **IMPROVEMENTS IN HIGH SPEED ROTOR SHAFTS**
VERBESSERUNGEN BEI HOCHGESCHWINDIGKEITS - ROTORWELLEN
PERFECTIONNEMENTS CONCERNANT LES ARBRES DE ROTORS GRANDE VITESSE

(30) Priority: 29.01.1997 AU PO484697
(43) Date of publication of application: 17.11.1999
(73) Proprietor: Turbocor Inc., Dorval, Quebec H9P 2N4 (CA); COMMONWEALTH SCIENTIFIC AND INDUSTRIAL RESEARCH ORGANISATION, Campbell, Australian Capital Territory 2612 (AU); UNIVERSITY OF TECHNOLOGY, SYDNEY, Broadway, NSW 2007 (AU)
(72) Inventor: CONRY, Ronald, David, Lilydale, VIC 3140 (AU); DIETZEL, Randolph, Rowville, VIC 3178 (AU); LIN, Huai, Yu, Wantirna South, VIC 3152 (AU); LOVATT, Howard C., Balmain, NSW 2041 (AU); WATTERSON, Peter, Andrew, Denistone, NSW 2114 (AU)
(74) Representative: Texier, Christian
(86) International application number: PCT/AU1998/000044
(87) International publication number: WO 1998/034324

(56) References cited:
- EP-A- 0 134 670
- EP-A- 0 187 478
- GB-A- 2 052 319
- US-A- 4 617 726
- US-A- 4 638 200
- US-A- 4 667 123
- US-A- 4 742 259
- US-A- 4 942 322
- PATENT ABSTRACTS OF JAPAN, (E-1139), page 145; & JP,A,03 203 541 (ISUZU MOTORS LTD) 5 September 1991.

## Description

### Field of the Invention

This invention relates to improvements in high speed rotor shafts and relates particularly to the rotor shafts of high speed electric motors.

The invention will be described with particular reference to its application in an electric motor for a gas, air or refrigerant compressor. However, it will be understood that the principles of the invention may be applied to rotors for other forms of electric motors, and to other rotor structures used in other applications.

### Background of the Invention

High speed, brushless, DC motors are known although such motors are generally of a relatively low power output and, therefore, have limited application. In this connection, reference can be made to the text "Direct Current Machines" by Say and Taylor (Pitman International) and particularly sections 4.8, 5.10 and 11. In one described form, such a motor includes a rotor incorporating a rare earth magnet, such as a grade of Neodymium-Iron-Boron [NdFeB]. This material, and other rare earth magnetic material, generally has a low tensile strength and is somewhat brittle, thus restricting its use. Other forms of motors use ferrites or other magnetic material. As the high rotational speeds of such electric motors generate substantial centrifugal forces, it is necessary to construct the rotor in a way which ensures that the magnet core does not crack, distort, disintegrate or otherwise become unusable.

US-A-4942322 discloses a permanent magnet rotor which has a permanent magnet contained within a sheath. The sheath is metallurgically bonded to the permanent magnet. Shaft members are attached to each end of the metal sheath by welding.

It is therefore desirable to provide a rotor for a high speed machine, such as an electric motor, which has a magnet core of a low tensile material, such as a rare earth magnet material.

It is also desirable to provide a rotor for an electric motor which is constructed in such a way as to provide the required mechanical properties necessary to operate at high rotational speeds.

It is also desirable to provide a rotor which is able to be manufactured economically.

It is also desirable to provide a method of construction of a rotor having a rare earth magnet core.

### Summary of the Invention

According to one aspect of the invention there is provided a rotor for a high speed machine, such as a brushless, DC motor, said rotor having a rare earth magnet core, a sleeve formed of non-magnetic material surrounding said magnet core to radially constrain the core during high speed rotation thereof, the sleeve extending beyond the core in both axial directions end pieces secured within each end of the sleeve and respectively directly or indirectly engaged with each end of the magnet core, characterised in that the end pieces apply an axial compressive force to the magnet core with the sleeve being heat-shrunk onto the end pieces to produce an interference kit, which secures the end pieces to the sleeve.

In one embodiment, the rotor is used in a brushless, DC motor in which the magnet core is magnetized diametrically, and the core material is preferably Neodymium-Iron-Boron [NdFeB]. In this embodiment, the motor is designed to have an operating speed range of between approximately 20,000 rpm and 50,000 rpm.

The rotor of the invention can also be used in machines having much higher rotational speeds. In motors currently under development, design speeds of 250,000 rpm and greater are proposed. Motors having such extremely high rotational speeds will be of a very small size but with a power output sufficient to operate a centrifugal compressor for a refrigeration system, for example.

In embodiments of the invention, the high rotational speed of the rotor makes severe mechanical demands on the rotor which must be constructed so as to withstand the forces generated. The rotor must also be sufficiently stiff that its resonant bending frequency exceeds the maximum rotating frequency. The rotor must also be as light as possible to minimize loading on rotor bearings.

In a particular embodiment of the invention, the sleeve applies a radial compressive force to the magnet core. Thus, the core is under both radial and axial compressive forces while at rest. On rotation, the centrifugal forces developed are counteracted by the tension in the sleeve so that, at maximum rotational speed, minimal, if any, tension occurs in the magnetic core. Thus, the compressive forces on the core exerted by the sleeve and the end pieces ensure that the material of the core remains intact and the compressive forces also reduce the radial tension in the magnet core during rotation. Depending on the mode of construction used, and the desired structure of the rotor, the end pieces can be either directly or indirectly engaged with the ends of the core.

The rotor sleeve is preferably formed of a non-magnetic, high strength metal, such, as Inconel, which has a relatively high Young's modulus and is able to provide the necessary bending stiffness required for the motor shaft. However, other high strength materials may be used to form the sleeve of the rotor, such as titanium and its alloys.

The invention also provides a method of constructing a rotor for a high speed machine, said rotor including a rare earth magnet core, said method including steps of forming a sleeve the inner diameter of which is of a dimension which provides an interference fit with the magnet core and end pieces to be located within the sleeve, heating the sleeve to a temperature below its tempering temperature so that the sleeve radially and axially expands, inserting the magnet core and end pieces in the expanded sleeve, applying an axial force to the end pieces so as to apply compressive forces to the core, and cooling the sleeve whereby the sleeve shrinks around the outer surfaces of the magnet core and end pieces. By this process, the magnet core is compressed axially due to the axial forces applied to the end pieces as well as the shrinkage of the sleeve onto the magnet core.

In one embodiment, the sleeve is a pre-hardened, solution annealed, ultrahigh strength aerospace grade non-magnetic metal alloy. The sleeve is heated to the desired temperature, below the tempering temperature of the material, by an induction heating coil system into which the sleeve is placed. Once the sleeve is at the designated temperature, the magnet core and end pieces are accurately located within the sleeve. Axial pre-loading forces are applied to the end pieces to hold the magnet core in compression while the sleeve is rapidly cooled. The cooling causes the sleeve to shrink around the surfaces of the magnet and end pieces. The compressive forces applied to the end pieces in the preferred embodiment may be up to about 600 M pascals.

The rate of cooling is accurately controlled to prevent damage to the magnetic properties and the surface of the magnet core and, preferably, to engage with and grip the end pieces before engaging and gripping the magnet core. The axial shrinking of the sleeve as it cools also assists in maintaining or generating axial compression on the magnet core.

It will be appreciated that the end pieces may comprise shaft stubs for the rotor. In another form of the invention, one end piece comprises a shaft stub of non-magnetic material, such as Inconel, while the other end piece or part of the end piece is a non-magnetic spacer piece which is disposed between the magnet core and a shaft stub formed of other, possibly magnetic material.

It will be appreciated that a rotor of the invention, while having particular application in a high speed, brushless, DC motor, may also be useful in magnetic coupling applications where, for example, the shaft of a gas turbine is magnetically coupled to the shaft of a centrifugal compressor or the like. With this arrangement, the magnet core is designed for coupling purposes and may therefore have a different structure to one designed for use in a motor.

In order that the invention is more readily understood, one embodiment thereof will now be described with reference to the accompanying drawing wherein:

### Description of the Drawings

Fig. 1 is a part sectional, schematic elevational view of a rotor shaft showing the motor stator surrounding the shaft; and
Fig. 2 is a schematic illustration of the assembly of the rotor shaft.

### Description of a Preferred Embodiment

Referring to the drawing, the rotor 10 illustrated is designed for use in a high speed, brushless, DC motor to drive a centrifugal compressor (not shown). The motor is designed to be as compact as possible in order to reduce as far as possible the overall size of the combined motor/compressor. However, it is necessary that the motor delivers sufficient power to the compressor.

The rotor 10 comprises a magnet core 12 which is formed of Neodymium-Iron-Boron (NdFeB) which is a sintered magnetic material with relatively low tensile strength. A sleeve 14 surrounds the magnet core 12 and extends axially therefrom in both directions to form a hollow shaft. In this embodiment, the sleeve 14 is formed of Inconel 718, which is an ultra-high strength aerospace grade non-magnetic alloy of low magnetic permeability. The sleeve 14 is pre-stressed to provide a radial and axial compressive force on the magnet core 12. In addition, the core 12 is subjected to axial compressive forces between a non-magnetic shaft stub 16 and a non-magnetic spacer 17. Both the shaft stub 16 and spacer 17 may also be formed of Inconel, although other non-magnetic material may be used.

A second shaft stub 18 of magnetic material is also engaged by the sleeve 14 outwardly of the spacer 17. Both the shaft stubs 16 and 18 of this embodiment are designed to support the rotor 10 in magnetic bearings, shown generally at 19. The outer end of the shaft stub 18 is adapted to support an impeller of a refrigerant compressor (not shown).

Preferably, both the shaft stubs 16 and 18 and the spacer 17 are formed of dimensions to provide an interference fit with the inner surface of the sleeve 14. However, it will be understood that one or other of the shaft stub 18 and spacer 17 may not be an interference fit, provided that the other is so that the compressive forces are able to be applied thereby to the magnet core 12.

The structure of the rotor 10 forms a relatively stiff, and therefore mechanically stable, rotor for the electric motor. The magnet core 12 is maintained under both radial and axial compressive forces by the sleeve 14 and the shaft stub 16 and spacer 17 so that, at the high rotational operating speeds of the rotor, of up to 50,000 rpm, or even 250,000 rpm, the generated centrifugal forces are balanced.

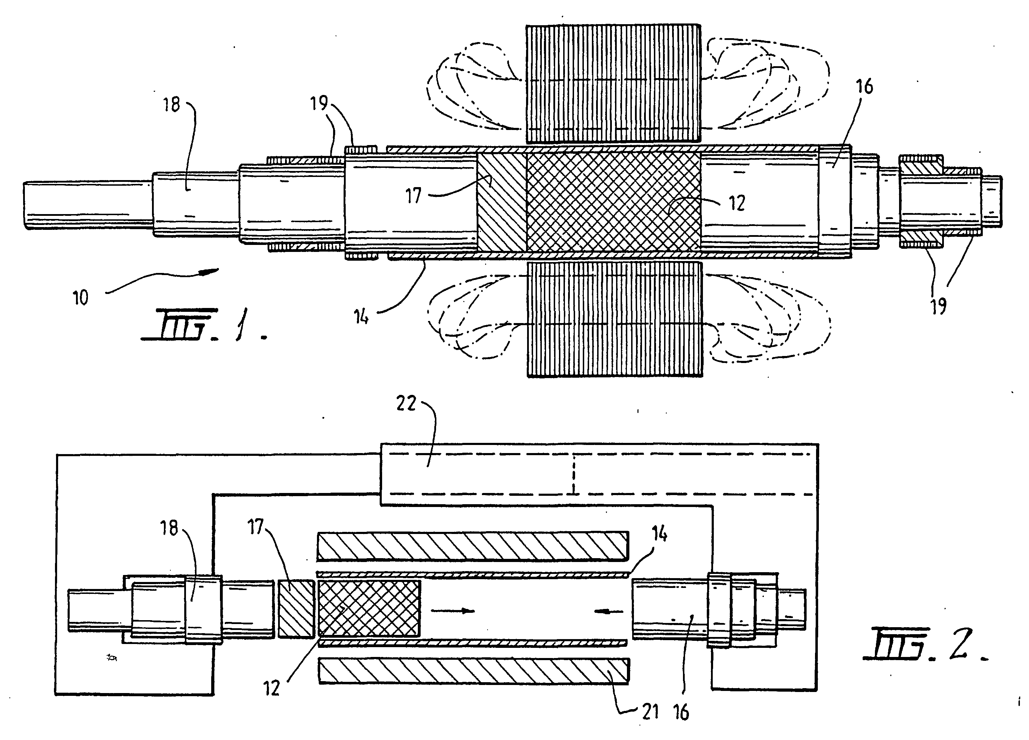

Referring to Fig. 2, a method of assembly of the constituent parts of the rotor shaft is diagrammatically shown. The assembly method enables the compressive forces in the embodiment illustrated to be achieved by heating the sleeve 14 by way of induction heating using an induction heater 21 which heats the sleeve 14 to a temperature of between 400°C and 480°C, which is below its tempering temperature. It is preferable to keep the temperatures as low as possible to reduce any tendency to damage the surface of the magnet core. A jigging tool 22 then inserts the magnet core 12, the non-magnetic shaft stub 16, spacer 17 and the magnetic shaft stub 18. An axial force of up to about 600 M pascals is applied to the shaft stubs 16 and 18 to preload the spacer and magnet core 12 in compression while the sleeve 14 is rapidly cooled so as to shrink around the outer surfaces of the shaft stubs 16 and 18, the sleeve 14 and the magnet core 12. The total process takes approximately 5 seconds, and the rate of cooling is accurately controlled to prevent damage to the magnet core 12. The dimensions of the shaft stubs 16 and 18 are such that they are gripped radially by the cooling sleeve 14 before the magnetic core 12 so that the continued cooling also produces an axially shrinkage whereby the shaft stubs 16 and 18 and spacer 17 continue to apply an axial compressive force to the magnet core 12.

If desired, the shaft stubs 16 and 18 may be welded to the sleeve 14. The interior of the rotor may also be evacuated or filled with a gas that is chemically compatible with the magnet producing a hermetically sealed unit, if desired.

It will be appreciated that, as previously indicated, the spacer 17 may have a dimension such that it is not an interference fit with the sleeve 14. In this case, the compressive forces are applied between the shaft stubs 16 and 18, and the spacer is also held in compression thereby. With this arrangement, the spacer merely acts to magnetically separate the magnet core 12 from the shaft stub 18. Spacers may be provided at each end of the magnet core if desired and particularly if both shaft stubs are formed of a magnetic material.

Many modifications may be made in the design and/or construction of a rotor in accordance with the present invention as defined in the claims.

## Claims

1. A rotor (10) for a high speed machine, such as a brushless, DC motor, said rotor having a rare earth magnet core (12), a sleeve (14) formed of non-magnetic material surrounding said magnet core (12) to radially constrain the core during high speed rotation thereof, the sleeve (14) extending beyond the core in both axial directions, end pieces (16, 18) secured within each end of the sleeve (14) and respectively directly or indirectly engaged with each end of the magnet core (12) **characterised in that** the end pieces (16, 18) apply an axial compressive force to the magnet core with the sleeve (14) being heat-shrunk onto the end pieces (16, 18) to produce an interference kit, which secures the end pieces (16, 18) to the sleeve (14).

2. A rotor according to claim 1 wherein the magnet core (12) is magnetized diametrically, and the core material is Neodymiumlron-Boron [NdFeB].

3. A rotor according to claim 1 or claim 2 wherein the resonant bending frequency of the rotor (10) exceeds the maximum rotating frequency.

4. A rotor according to any one of claims 1 to 3 wherein the sleeve (14) applies a radial compressive force to the magnet core (12) so that the core is under both radial and axial compressive forces while at rest.

5. A rotor according to claim 1 wherein the compressive force is of a magnitude that, at maximum rotational speed, minimal, if any, tension occurs in the magnetic core (12).

6. A rotor according to any one of claims 1 to 5 wherein at least one of the end pieces (16, 18) is indirectly engaged with the respective end of the core (12) through a non-magnetic spacer (17).

7. A rotor according to any one of claims 1 to 6 wherein the rotor sleeve (14) is formed of a non-magnetic, high strength metal, which has a relatively high Young's modulus to provide bending stiffness for the motor shaft.

8. A rotor according to claim 7 wherein the material of the rotor sleeve (14) is selected from Inconel, titanium and titanium alloy.

9. A method of constructing a rotor (10) for a high speed machine, said rotor including a rare earth magnet core (12), including steps of forming a sleeve (14) the inner diameter of which is of a dimension which provides an interference fit with end pieces (16, 18) to be located within the sleeve (14), **characterised in that** the method further includes: heating the sleeve (14) to a temperature below its tempering temperature so that the sleeve (14) radially and axially expands, inserting the magnet core (12) and end pieces (16, 18) in the expanded sleeve (14), applying an axial force to the end pieces (16, 18) so as to apply compressive forces to the core (12), and cooling the sleeve (14) whereby the sleeve (14) shrinks around the outer surfaces of the magnet core (12) and end pieces (16, 18).

10. A method according to claim 9 providing a diameter of the magnet core (12) to have a dimension which gives an interference fit with the sleeve (14).

11. A method according to claim 9 or claim 10 wherein the sleeve (14) is heated to the desired temperature by an induction heating coil system into which the sleeve is placed.

12. A method according to any one of claims 9 to 11 including the step of rapidly cooling the heated sleeve (14) while the core is under compressive pre-stressing forces.

13. A method according to claim 12 including the step of controlling the rate of cooling to prevent damage to the magnetic properties and the surface of the magnet core (12) and to ensure that the sleeve (14) engages with and grips the end pieces (16, 18) before engaging and gripping the magnet core (12).

14. An electric motor having a rotor (10) according to any one of claims 1 to 8.

15. An electric DC motor having a rotor (10) as claimed in claim 2.

## Patentansprüche

1. Rotor (10) für eine Hochgeschwindigkeitsmaschine wie einen bürstenlosen Gleichstrommotor, wobei der Rotor einen Seltenerd-Magnetkern (12), eine Hülse (14), die aus unmagnetischem Material gebildet ist, das den Magnetkern (12) so umgibt, dass es den Kern während einer Hochgeschwindigkeitsrotation von ihm radial einzwängt, und die in beiden Axialrichtungen über den Kern hinausläuft, und Endstücke (16, 18) hat, die innerhalb jedes Endes der Hülse (14) gesichert sind und jeweils mit jedem Ende des Magnetkerns (12) direkt oder indirekt in Eingriff stehen, **dadurch gekennzeichnet, dass** die Endstücke (16, 18) auf den Magnetkern eine axiale Druckkraft aufbringen, wobei die Hülse (14) auf die Endstücke (16, 18) wärmeaufgeschrumpft ist, um für eine Presspassung zu sorgen, welche die Endstücke (16, 18) an der Hülse (14) sichert.

2. Rotor nach Anspruch 1, bei dem der Magnetkern (12) diametral magnetisiert ist und das Kernmaterial Neodym-Eisen-Bor [NdFeB] ist.

3. Rotor nach Anspruch 1 oder 2, bei dem die Resonanzbiegungsfrequenz des Rotors (10) größer als die maximale Rotationsfrequenz ist.

4. Rotor nach einem der Ansprüche 1 bis 3, bei dem die Hülse (14) auf den Magnetkern (12) eine radiale Druckkraft aufbringt, so dass der Kern in Ruhe unter sowohl radialen als auch axialen Druckkräften steht.

5. Rotor nach Anspruch 1, bei dem die Druckkraft eine solche Höhe hat, dass im Magnetkern (12) bei maximaler Rotationsgeschwindigkeit eine allenfalls minimale Spannung auftritt.

6. Rotor nach einem der Ansprüche 1 bis 5, bei dem mindestens eines der Endstücke (16, 18) über einen unmagnetischen Abstandshalter (17) mit dem jeweiligen Ende des Kerns (12) indirekt in Eingriff steht.

7. Rotor nach einem der Ansprüche 1 bis 6, bei dem die Rotorhülse (14) aus einem unmagnetischen, hochfesten Metall gebildet ist, das einen verhältnismäßig hohen E-Modul hat, um der Motorwelle Biegesteifheit zu verleihen.

8. Rotor nach Anspruch 7, bei dem das Material der Rotorhülse (14) aus Inconel, Titan und einer Titanlegierung gewählt ist.

9. Verfahren zum Aufbau eines Rotors (10) für eine Hochgeschwindigkeitsmaschine, der einen Seltenerd-Magnetkern (12) enthält, mit den Schritten Bilden einer Hülse (14), deren Innendurchmesser eine Abmessung hat, die mit innerhalb der Hülse (14) anzuordnenden Endstücken (16, 18) eine Presspassung ergibt, **dadurch gekennzeichnet, dass** das Verfahren außerdem Folgendes umfasst: Erhitzen der Hülse (14) auf eine Temperatur unterhalb ihrer Anlasstemperatur, so dass sich die Hülse (14) radial und axial weitet, Einführen des Magnetkerns (12) und der Endstücke (16, 18) in die geweitete Hülse (14), Aufbringen einer Axialkraft auf die Endstücke (16, 18), damit auf den Kern (12) Druckkräfte aufgebracht werden, und Abkühlen der Hülse (14), wodurch die Hülse (14) um die Außenflächen des Magnetkerns (12) und der Endstücke (16, 18) herum aufschrumpft.

10. Verfahren nach Anspruch 9, bei dem ein Durchmesser des Magnetkerns (12) eine Abmessung erhält, die mit der Hülse (14) eine Presspassung ergibt.

11. Verfahren nach Anspruch 9 oder 10, bei dem die Hülse (14) durch ein Induktionsheizungsspulensystem, in das die Hülse gesetzt wird, auf die gewünschte Temperatur erhitzt wird.

12. Verfahren nach einem der Ansprüche 9 bis 11, mit dem Schritt rasches Abkühlen der erhitzten Hülse (14), während der Kern unter Vorspannungsdruckkräften steht.

13. Verfahren nach Anspruch 12, mit dem Schritt Steuern der Abkühlgeschwindigkeit, um eine Beeinträchtigung der Magneteigenschaften und der Oberfläche des Magnetkerns (12) zu verhindern und um sicherzustellen, dass die Hülse (14), bevor sie mit dem Magnetkern (12) in Eingriff gelangt und ihn greift, mit den Endstücken (16, 18) in Eingriff gelangt und sie greift.

14. Elektromotor mit einem Rotor (10) gemäß einem der Ansprüche 1 bis 8.

15. Elektrischer Gleichstrommotor mit einem Rotor (10), wie er in Anspruch 2 beansprucht ist.

## Revendications

1. Rotor (10) pour une machine à grande vitesse, telle qu'un moteur à courant continu sans balai, ledit rotor comportant un noyau magnétique en terre rare (12), un manchon (14) formé d'un matériau non magnétique entourant ledit noyau magnétique (12) pour limiter radialement le noyau pendant sa rotation à grande vitesse, le manchon (14) se prolongeant au-delà du noyau dans les deux directions axiales, des pièces d'extrémité (16, 18) fixées dans chaque extrémité du manchon (14) et respectivement directement ou indirectement en prise avec chaque extrémité du noyau magnétique (12), **caractérisé en ce que** les pièces d'extrémité (16, 18) appliquent une force de compression axiale au noyau magnétique, le manchon (14) étant thermorétracté sur les pièces d'extrémité (16, 18) pour produire un ajustement serré qui fixe les pièces d'extrémité (16, 18) au manchon (14).

2. Rotor selon la revendication 1, dans lequel le noyau magnétique (12) est diamétralement magnétisé et le matériau magnétique est du Néodyme-Fer-Bore [NdFeB].

3. Rotor selon la revendication 1 ou la revendication 2, dans lequel la fréquence de flexion de résonance du rotor (10) dépasse la fréquence de rotation maximale.

4. Rotor selon l'une quelconque des revendications 1 à 3, dans lequel le manchon (14) applique une force de compression radiale au noyau magnétique (12) de telle sorte que le noyau soit soumis à la fois à des forces de compression radiales et axiales lorsqu'il est au repos.

5. Rotor selon la revendication 1, dans lequel la force de compression et d'une amplitude telle qu'à la vitesse de rotation maximale, minimale s'il y a lieu, une tension se produit dans le noyau magnétique (12).

6. Rotor selon l'une quelconque des revendications 1 à 5, dans lequel au moins l'une des pièces d'extrémité (16, 18) est indirectement en prise avec l'extrémité respective du noyau (12) par l'intermédiaire d'une pièce d'écartement non magnétique (17).

7. Rotor selon l'une quelconque des revendications 1 à 6, dans lequel le manchon du rotor (14) est formé d'un métal non magnétique de haute solidité, ayant un module de Young relativement élevé pour assurer la rigidité en flexion de l'arbre du moteur.

8. Rotor selon la revendication 7, dans lequel le matériau du manchon du rotor (14) est choisi parmi l'Inconel, le titane et un alliage de titane.

9. Procédé de construction d'un rotor (10) pour une machine à grande vitesse, ledit rotor comportant un noyau magnétique en terre rare (12), comportant les étapes consistant à former un manchon (14) dont le diamètre intérieur est d'une dimension permettant un ajustement serré avec des pièces d'extrémité (16, 18) destinées à être placées dans le manchon (14), **caractérisé en ce que** le procédé comporte en outre : le chauffage du manchon (14) jusqu'à une température inférieure à sa température de durcissement de telle sorte que le manchon (14) se dilate axialement et radialement, l'insertion du noyau magnétique (12) et des pièces d'extrémité (16, 18) dans le manchon dilaté (14), l'application d'une force axiale aux pièces d'extrémité (16, 18) de façon à appliquer des forces de compression au noyau (12) et le refroidissement du manchon (14) de telle sorte que le manchon (14) rétrécisse autour des surfaces extérieures du noyau magnétique (12) et des pièces d'extrémité (16, 18).

10. Procédé selon la revendication 9, procurant un diamètre du noyau magnétique (12) ayant une dimension fournissant un ajustement serré avec le manchon (14).

11. Procédé selon la revendication 9 ou la revendication 10, dans lequel le manchon (14) est chauffé jusqu'à la température désirée par un système de bobine de chauffage à induction dans lequel est placé le manchon.

12. Procédé selon l'une quelconque des revendications 9 à 11, comportant l'étape consistant à refroidir rapidement le manchon chauffé (14) pendant que le noyau est soumis à des forces de précontrainte de compression.

13. Procédé selon la revendication 12, comportant l'étape consistant à contrôler la vitesse de refroidissement pour éviter d'endommager les propriétés magnétiques et la surface du noyau magnétique (12) et pour s'assurer que le manchon (14) vient en prise avec et saisit les pièces d'extrémité (16, 18) avant de venir en prise avec et saisir le noyau magnétique (12).

14. Moteur électrique comportant un rotor (10) selon l'une quelconque des revendications 1 à 8.

15. Moteur électrique à courant continu comportant un rotor (10) selon la revendication 2.
